# EUROPÄISCHE PATENTSCHRIFT

(11) **EP 2 180 388 B1**
(45) Veröffentlichungstag und Bekanntmachung des Hinweises auf die Patenterteilung: **19.06.2013**
(21) Anmeldenummer: 09012991.7
(22) Anmeldetag: 14.10.2009
(51) Int. Cl.: G05B 19/042, H04L 12/24

(54) **Verfahren zur Projektierung einer busorientierten programmierbaren Elektroinstallation**
Method for projecting a bus-oriented programmable electric installation
Procédé de projection d'une installation électrique programmable orientée vers le bus

(30) Priorität: 23.10.2008 DE 102008052913
(43) Veröffentlichungstag der Anmeldung: 28.04.2010
(73) Patentinhaber: Schneider Electric Industries SAS, 92500 Rueil-Malmaison (FR)
(72) Erfinder: Stigzelius, Johan, 02200 Espoo (FI)
(74) Vertreter: Manitz, Finsterwald & Partner GbR

(56) Entgegenhaltungen:
- EP-A1- 1 134 864
- EP-A1- 1 584 998
- EP-A2- 1 450 279
- DE-A1- 10 241 875
- DE-A1-102005 019 570
- DE-B3- 10 311 055
- BFE-OLDENBURG: "Tutorial ETS 3 Professional passage" TUTORIAL ETS3 PROFESSIONAL, XX, XX, 25. März 2004 (2004-03-25), Seiten 1-37, XP002334286

## Beschreibung

Die Erfindung betrifft ein Verfahren zur Projektierung einer busorientierten programmierbaren Elektroinstallation nach dem Oberbegriff des Patentanspruches 1 sowie ein entsprechendes Computerprogramm.

Elektroinstallationen in Gebäuden werden häufig unter Verwendung von Bustechnik verwirklicht. Eines dieser Bussysteme ist der European Installation Bus (EIB), über den in einem Gebäude installierte Elektrogeräte (Aktoren), wie z. B. Lichtquellen, Jalousien, Ventilatoren, Heizungen, Alarmanlagen, und Bedienungselemente (Sensoren), wie z. B. Taster, Schalter, Dimmer, verbunden und gesteuert werden können. Dieses Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet.

Bei der Inbetriebnahme eines derartigen Bussystems müssen die Kommunikationsbeziehungen und Parameter der Busteilnehmer projektiert werden. Im Falle des EIB kommt hierbei häufig die Engineering-Tool-Software (ETS) zum Einsatz. Bei der ETS handelt es sich um ein datenbankbasiertes grafisches Werkzeug zur Projektierung einer busorientierten programmierbaren Elektroinstallation. Unter Verwendung der Datenbank werden in der ETS die Projektierungsdaten, d.h. die Kommunikationsbeziehungen und die Geräteparameter, für jeden Busteilnehmer bzw. jedes Applikationsprogramm separat erstellt und abschließend über eine Schnittstelle in das Bussystem und deren Teilnehmer eingespeist. Die gerätespezifische Projektierung ist insbesondere im Bereich von Zweckbauten mit mehreren Hundert Installationsgeräten mit einem sehr hohen Aufwand verbunden.

EP 1 584 998 A1 offenbart ein Verfahren zur Projektierung einer busorientierten programmierbaren Elektroinstallation, bei dem Projektierungsdaten eines ersten Applikationsprogramms in ein zweites Applikationsprogramm übernommen werden.

Das Dokument "ETS 3 Professional Tutorial zu Version 1.0", EIBA cvba Brüssel, bfe-Oldenburg Verlag, 25.03.2004 offenbart ein Verfahren zur Projektierung einer busorientierten programmierbaren Elektroinstallation, bei dem ein datenbankorientiertes Konfigurationsprogramm verwendet wird, in dem gerätespezifische Projektierungsdaten erstellt werden.

DE 102 41 875 A1 offenbart ein Datenverarbeitungssystem für ein elektronisches Gebäude-Installationsbussystem, welches ein konfigurierbares intelligentes Kontrollgerät umfasst.

DE 10 2005 019 570 A1 offenbart ein Verfahren zum Ermitteln eines Stromverbrauchs oder einer Leistungsaufnahme einer Buskopplungseinrichtung in einem elektronischen Gebäude-Installationsbussystem.

EP 1 134 864 A1 offenbart ein graphisches Verfahren zur Projektierung einer busorientierten programmierbaren Elektroinstallation, bei dem Geräte aus einer Geräteliste ausgewählt und einzelnen Räumen eines Gebäudes zugeordnet werden und die in einem Raum platzierten Geräte graphisch gemäß elektrischer Schaltungen miteinander verschaltet werden.

Die Aufgabe der vorliegenden Erfindung besteht darin, die Projektierung einer busorientierten programmierbaren Elektroinstallation zu erleichtern.

Gelöst wird diese Aufgabe durch ein im Patentanspruch 1 angegebenes Verfahren und durch ein im Patentanspruch 6 angegebenes Computerprogramm. Vorteilhafte Ausgestaltungen ergeben sich aus den Unteransprüchen.

Das Verfahren gemäß dem Patentanspruch 1 umfasst, dass die Projektierung einer Elektroinstallation mit Hilfe eines ersten Konfigurationsprogramms und eines zweiten Konfigurationsprogramms durchgeführt wird, wobei Projektierungsdaten des zweiten Konfigurationsprogramms in das erste Konfigurationsprogramm portiert werden und dort übernommen oder weiterbearbeitet werden. Vorzugsweise sind in beiden Programmen Datenbanken hinterlegt.

Das zweite Konfigurationsprogramm enthält eine Datenbank, in der unterschiedlichste Projektierungslösungen und -modelle abgelegt sind, die nach verschiedenen Anwendungskriterien bei der Projektierung einer Elektroinstallation auswählbar sind und projektspezifisch angepasst zur Bildung eines neuen Installationsprojektes dienen. Auswählbare Anwendungskriterien sind z. B. Gebäudearchitekturen, Ausstattungsumfänge oder Funktionalitäten sowie Sicherheitslösungen oder Energiemanagementanwendungen. Insbesondere lassen sich Konfigurationsdaten unter energetischen Aspekten bewerten und verändern, so dass eine Projektierung auch hinsichtlich des Kosten-Nutzen-Verhältnis optimiert werden kann.

In dem zweiten Konfigurationsprogramm werden somit anwendungsorientierte Projektierungsdaten erzeugt, wobei die einzelnen Busteilnehmer nicht mehr einzeln sondern entsprechend der ausgewählten Anwendungskriterien gruppenweise konfiguriert werden. Nach Abschluss der anwendungsrelevanten Projektierung werden die Daten aus dem zweiten Konfigurationsprogramm in das erste Konfigurationsprogramm, vorzugsweise die ETS, übertragen. Die Projektierungsdaten (Kommunikationsverbindungen und Geräteparameter) werden nach ihrer Übermittlung innerhalb des ersten Konfigurationsprogramms vorzugsweise automatisch und direkt in die endgültige Projektierung übernommen und müssen somit nicht einzeln für jeden Busteilnehmer programmiert werden.

In dem ersten Konfigurationsprogramm kann aber weiterhin auf die einzelnen Gerätekonfigurationen zugegriffen werden, so dass nicht von dem zweiten Konfigurationsprogramm erfasste Einstellungen separat und manuell vorgenommen werden können. Darüber hinaus können auf diese Weise die Konfigurationsdaten spezifischer Busteilnehmer nachbearbeitet und korrigiert werden.

Durch dieses Verfahren wird die Projektierung einer busorientierten programmierbaren Elektroinstallation erheblich vereinfacht, da der Umfang der einzeln einzugebenden Konfigurationsdaten drastisch reduziert wird. Bisher notwendige Detailkenntnisse sind für die Projektierung einer Elektroinstallation nur noch bedingt erforderlich, so dass das Programm von einer Mehrzahl von Anwendern genutzt werden kann. Vorteilhafterweise ist durch entsprechende Projektierungsmodelle ein wirtschaftlich und technisch sinnvoller Einsatz von Ressourcen (Busteilnehmern) möglich, wodurch falsche oder falsch eingestellte Busteilnehmer vermieden werden können.

Weitere Einzelheiten, Merkmale und Vorteile der Erfindung ergeben sich aus nachfolgender Beschreibung eines bevorzugten Ausführungsbeispieles anhand der Zeichnungen.

Es zeigt:

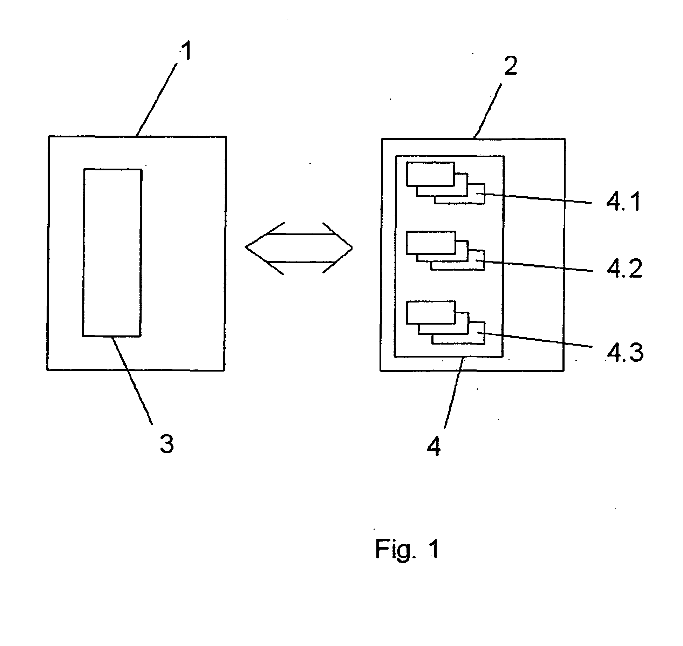

- Figur 1: eine stark vereinfachte schematische Darstellung des erfindungsgemäßen Verfahrens.

Gleiche oder gleichwirkende Bauteile sind in der nachfolgenden Beschreibung mit gleichen Bezugszeichen versehen.

Nachfolgend wird die Funktionsweise des erfindungsgemäßen Verfahrens anhand eines Ausführungsbeispieles schematisch beschrieben.

Das Verfahren eignet sich zur Projektierung einer busorientierten programmierbaren Elektroinstallation und wird vorzugsweise für ein Bussystem gemäß dem European Installation Bus (EIB) verwendet, um Verbindungen und Parameter der in dem Gebäude installierten Elektrogeräte (Aktoren), wie z. B. Lichtquellen, Jalousien, Ventilatoren, Heizungen, A-larmanlagen, und Bedienungselemente (Sensoren), wie z. B. Taster, Schalter, Dimmer, zu konfigurieren. Das EIB-System basiert darauf, dass jeder Busteilnehmer über einen eigenen Mikroprozessor verfügt und somit selbständig und unabhängig von einem zentralen Prozessor seine Daten verwaltet.

Bei der Projektierung des Bussystems werden den Busteilnehmern die jeweiligen Kommunikationsbeziehungen und Parameter zugeordnet. Gemäß Figur 1 wird hierzu ein erstes Konfigurationsprogramm 1 und ein zweites Konfigurationsprogramm 2 verwendet. Bei beiden Programmen 1 und 2 handelt es sich um datenbankbasierte grafische Werkzeuge. Nach Abschluss der vorteilhafterweise extern stattfindenden Projektierung werden die Projektierungsdaten über eine Schnittstelle in das Bussystem bzw. die Busteilnehmer eingespeist.

Bei dem ersten Konfigurationsprogramm 1 handelt es sich um die Engineering-Tool-Software (ETS). Unter Verwendung einer internen Datenbank 3 werden in der ETS die Konfigurationsdaten, d.h. die Kommunikationsbeziehungen und die Geräteparameter, für jeden Busteilnehmer bzw. dessen Applikationsprogramm separat erstellt. Für die Projektierung eines sehr komplexen Installationsprojektes mit einer Vielzahl an Busteilnehmern erfordert dies einen erheblichen manuellen Projektierungsaufwand.

Erfindungsgemäß ist es vorgesehen, die Projektierung durch ein zweites Konfigurationsprogramm 2 mit zusätzlichen Funktionalitäten zu vereinfachen, wobei Projektierungsdaten des zweiten Konfigurationsprogramms 2 in das erste Konfigurationsprogramm 1 portiert werden und dort übernommen oder weiterbearbeitet werden. In der erfindungsgemäßen Ausführungsform wird das zweite Konfigurationsprogramm 2 in das erste Konfigurationsprogramm implementiert 1, so dass die Programmmechanismen und -oberflächen einheitlich gestaltet und untereinander genutzt werden können.

Das zweite Konfigurationsprogramm 2 enthält eine Datenbank 4, in der unterschiedlichste Projektierungslösungen und -modelle 4.1, 4.2 und 4.3 abgelegt sind, die unter verschiedenen Anwendungskriterien auswählbar sind und projektspezifisch angepasst zur Bildung eines neuen Installationsprojektes dienen. Auswählbare Anwendungskriterien sind z. B. Gebäudearchitekturen, Ausstattungsumfänge oder Funktionalitäten sowie Sicherheitslösungen oder Energiemanagementanwendungen usw.

Beispielsweise lässt sich die Architektur eines Installationsprojektes hinsichtlich Gebäudenutzung, Anzahl und Form von Etagen und Räumen definieren. Weiterhin sind unterschiedlichste Ausstattungsvarianten (Basis bis Premium) sowie Funktionsumfänge für Licht, Temperatur, Beschattung und deren Steuerungsmöglichkeiten einstellbar. Insbesondere lassen sich Konfigurationsdaten unter energetischen Aspekten bewerten und verändern, so dass eine Projektierung auch hinsichtlich des Kosten-Nutzen-Verhältnis optimiert werden kann. Es ergeben sich dadurch detaillierte Lösungsvorschläge für die konkrete Bestückung des gesamten Installationsprojektes.

Dadurch werden auf einfache Weise anwendungsorientierte Projektierungsdaten erzeugt, wobei die einzelnen Busteilnehmer entsprechend der ausgewählten Anwendungskriterien gruppenweise konfiguriert werden. Nach Abschluss dieser anwendungsrelevanten Projektierung werden die Daten aus dem zweiten Konfigurationsprogramm 2 in das erste Konfigurationsprogramm 1 übertragen. Die Projektierungsdaten (Kommunikationsbeziehungen, Parameter, Applikationsprogramme) aus dem zweiten Konfigurationsprogramm 2 werden vorzugsweise ohne expliziten Export bzw. Import in das erste Konfigurationsprogramm 1 bzw. deren interner Datenbank 3 eingelesen und übernommen.

Der Export bzw. Import der Projektierungsdaten erfolgt dabei in einem strukturierten Format, insbesondere XML (Extensible Markup Language). Anstelle von XML kann auch eine andere standardisierte Metasprache für die Projektierungsdaten-Übergabe verwendet werden wie beispielsweise SGML (Standard Generalized Markup Language), HTML (Hypertext Markup Language) oder CSV (Comma-Separated Values). Der Export und Import der Projektierungsdaten in dem XML-Format ist vorzugsweise durch ETS-eigene Auslese- bzw. Einlesealgorithmen implementiert. Diese verwirklichen die Konvertierung der Projektierungsdaten aus dem proprietären ETS-Format in das XML-Format und zurück. Aufgrund der strukturierten Ablage in der exportierten XML-Datei ist der während des Importierens tätige Einlesealgorithmus der ETS in der Lage, eine Interpretation der Datenstruktur vorzunehmen.

Die übernommenen Daten werden innerhalb des ersten Konfigurationsprogramms 1 automatisch und direkt in die endgültige Projektierung übernommen und müssen nicht mehr einzeln für jeden Busteilnehmer programmiert werden. Nicht von dem zweiten Konfigurationsprogramm 2 erfasste Parameter und Einstellungen müssen natürlich weiterhin separat und manuell innerhalb des ersten Konfigurationsprogramms 1 eingegeben werden.

Für die gerätespezifische Konfiguration der Busteilnehmer sind in der ETS-Datenbank abgelegte Parameter mit eindeutigen Bezeichnungen und voreingestellten Standardwerten versehen. Anhand der in der ETS-Datenbank hinterlegten Parametemamen erfolgt der in die ETS integrierte Im- und Export der Parameter, indem nach Parametern mit dem gleichen Parametemamen gesucht wird. Bei einer Übereinstimmung wird der Parameterwert übernommen.

## Patentansprüche

1. Verfahren zur Projektierung einer busorientierten programmierbaren Elektroinstallation unter Verwendung von einem ersten datenbankorientierten (1) und einem zweiten datenbankorientierten (2) Konfigurationsprogramm , wobei
in einem ersten Schritt in dem zweiten Konfigurationsprogramm (2) eine anwendungsorientierte Programmierung erfolgt, bei der Projektierungsdaten aus einer Datenbank (4) mit Projektierungslösungen (4.1, 4.2, 4.3) dadurch erstellt werden, dass die in der Datenbank abgelegten Projektierungslösungen (4.1, 4.2, 4.3) nach verschiedenen ausgewählten Anwendungskriterien ausgewählt werden und mehrere Busteilnehmer entsprechend den ausgewählten Anwendungskriterien gruppenweise konfiguriert werden, wobei die in der Datenbank abgelegten Projektierungslösungen (4.1, 4.2, 4.3) projektspezifisch angepasst zur Bildung eines neuen Installationsprojektes dienen und detaillierte Lösungsvorschläge für die konkrete Bestückung des gesamten Installationsprojekts umfassen, und wobei in einem zweiten Schritt in dem ersten Konfigurationsprogramm (1) gerätespezifische Projektierungsdaten erstellt werden, indem die Projektierungsdaten des zweiten Konfigurationsprogramms (2) in das erste Konfigurationsprogramm (1) portiert werden und dort übernommen oder weiterbearbeitet werden.

2. Verfahren nach Patentanspruch 1, **dadurch gekennzeichnet, dass** die Projektierungsdaten von dem zweiten Konfigurationsprogramm (2) automatisch in das erste Konfigurationsprogramm (1) übertragen und eingelesen werden.

3. Verfahren nach einem der vorhergehenden Patentansprüche, **dadurch gekennzeichnet, dass** der Export und/oder der Import der Projektierungsdaten in einem strukturierten Format erfolgt.

4. Verfahren nach einem der vorhergehenden Patentansprüche, **dadurch gekennzeichnet, dass** die Projektierungsdaten in dem zweiten Konfigurationsprogramm (2) aus Projektierungslösungen (4.1, 4.2, 4.3) der Datenbank (4), die Gebäudearchitekturen, Ausstattungsumfänge oder Funktionalitäten sowie Sicherheitslösungen oder Energiemanagementanwendungen beinhalten, erstellt werden.

5. Verfahren nach einem der vorhergehenden Patentansprüche, **dadurch gekennzeichnet, dass** sich die Projektierungsdaten des zweiten Konfigurationsprogramms (2) unter energetischen Aspekten bewerten und verändern lassen.

6. Computerprogramm zur Projektierung einer busorientierten programmierbaren Elektroinstallation mit Rechenbefehlen zur Ausführung des Verfahrens nach einem der Patentansprüche 1 bis 5.

## Claims

1. A method of developing a bus-oriented programmable electrical installation using a first database-oriented configuration program (1) and a second database-oriented configuration program (2), wherein
in a first step, an application-oriented programming takes place in the second configuration program (2), in which programming development data are generated from a database (4) comprising development solutions (4.1, 4.2, 4.3) in that the development solutions (4.1, 4.2, 4.3) stored in the database are selected according to different selected application criteria and a plurality of bus users are configured group-wise in accordance with the selected application criteria, wherein the development solutions (4.1, 4.2, 4.3) stored in the database serve for the formation of a new installation development in a manner adapted to a specific development and comprise detailed solution proposals for the specific assembly of the total installation development; and wherein, in a second step, device-specific development data are generated in the first configuration program (1) in that the development data of the second configuration program (2) are ported into the first configuration program (1) and are taken over or further processed there.

2. A method in accordance with claim 1, **characterised in that** the development data are automatically transferred from the second configuration program (2) into the first configuration program (1) and are read in.

3. A method in accordance with one of the preceding claims, **characterised in that** the export and/or the import of the development data take(s) place in a structured format.

4. A method in accordance with any one of the preceding claims, **characterised in that** the development data are generated in the second configuration program (2) from development solutions (4.1, 4.2, 4.3) of the database (4) which include building architectures, equipment amounts or functionalities as well as safety solutions or energy management applications.

5. A method in accordance with any one of the preceding claims, **characterised in that** the development data of the second configuration program (2) can be evaluated and amended on the basis of energetic aspects.

6. A computer program for developing a bus-oriented programmable electrical installation using calculation commands for carrying out the method in accordance with any one of the claims 1 to 5.

## Revendications

1. Procédé de conception d'une installation électrique programmable orientée bus, recourant à un premier programme de configuration (1) orienté base de données et à un deuxième programme de configuration (2) orienté base de données, dans lequel
lors d'une première étape, une programmation orientée application est effectuée dans le deuxième programme de configuration (2), dans lequel les données de conception sont créées à partir d'une base de données (4) avec des solutions de conception (4.1, 4.2, 4.3) de telle manière que les solutions de conception (4.1, 4.2, 4.3) archivées dans la base de données sont sélectionnées suivant différents critères d'application choisis, et plusieurs utilisateurs du bus sont configurés par groupes en fonction des critères d'application choisis, les solutions de conception (4.1, 4.2, 4.3) archivées dans la base de données servant à former un nouveau projet d'installation de manière spécifiquement adaptée au projet, et comprenant des propositions de solution détaillées pour l'équipement concret de l'ensemble du projet d'installation, et où, lors d'une deuxième étape, des données de conception spécifiques à l'appareil sont créées dans le premier programme de configuration (1), les données de conception du deuxième programme de configuration (2) étant exportées vers le premier programme de configuration (1) où elles sont acceptées ou traitées.

2. Procédé selon la revendication 1, **caractérisé en ce que** les données de conception sont automatiquement transférées et enregistrées, du deuxième programme de configuration (2) vers le premier programme de configuration (1).

3. Procédé selon l'une des revendications précédentes, **caractérisé en ce que** l'exportation et/ou l'importation des données de conception sont effectuées dans un format structuré.

4. Procédé selon l'une des revendications précédentes, **caractérisé en ce que** les données de conception du deuxième programme de configuration (2) sont créées à partir de solutions de conception (4.1, 4.2, 4.3) de la base de données (4) qui contiennent des architectures de bâtiment, des étendues d'aménagement ou des fonctionnalités ainsi que des solutions de sécurité ou des applications de gestion de l'énergie.

5. Procédé selon l'une des revendications précédentes, **caractérisé en ce que** les données de conception du deuxième programme de configuration (2) sont évaluables et modifiables sous des aspects énergétiques.

6. Programme informatique pour la conception d'une installation électrique programmable orientée bus, avec des instructions de calcul pour l'exécution du procédé selon l'une des revendications 1 à 5.
